# EUROPEAN PATENT APPLICATION

(11) **EP 3 726 415 A1**
(43) Date of publication of application: **21.10.2020**
(21) Application number: 19305512.6
(22) Date of filing: 18.04.2019
(51) Int. Cl.: G06F 21/75, G06F 21/87, B42D 25/00, G06K 19/07, C25D 7/12

(54) **SECURITY ELEMENT ON MODULE**

(71) Applicant: Thales Dis France SA, 92190 Meudon (FR); Gemalto AG, 5000 Aarau (CH)
(72) Inventor: DEGEILH, Line, 92197 MEUDON (FR); SCHMIDT, Gregor, 92197 MEUDON (FR)
(74) Representative: Lotaut, Yacine Diaw

(57) **Abstract**

An electronic module (1) comprises a substrate (18), a support (8), at least one contact element (7), an encasing (20), and at least one security element (15). The security element (15) is arranged after the substrate (18) with respect to an extension direction (E) extending from the support (8) towards the substrate (18). A data carrier (2) comprises such a module (1) and a security document (3) comprises such a data carrier (2).

## Description

### TECHNICAL FIELD

The present invention relates to an electronic module according to the preamble of claim 1, to a data carrier comprising such an electronic module according to claim 7 and to a security element comprising such an electronic module and data carrier according to claim 11. It furthermore relates to a method of producing an electronic module according to claim 12 and to a method of producing a data carrier comprising such an electronic module according to claim 15.

### PRIOR ART

The provision of security elements on data carriers such as identity cards, passports, bank cards, etc., against forgery is well known in the art. Especially security elements in the context of data carriers comprising electronic modules, also referred to as chip cards or smart cards, are of great interest and importance, since the electronic modules frequently bear sensitive information and are used for authorizing processes such as financial transactions.

For example, from US 2015/0356400 A1 a smart card comprising a card body with an electronic module is known. A first security marking is distributed between the microelectronic module and the body of the smart card and a second security marking is placed on the card body. The two security markings are linked by a visual identity or matching relationship indicating that the electronic module and the card body are original components. In another embodiment the security markings are provided on a surface of the electronic module, located between contact zones or engraved directly on the antenna.

From GB 2 543 789 A a smart card comprising a smart card body, an electronic module mounted thereon and a module overlay configured to alter an appearance of the smart card is known. The module overlay is provided on the smart card body.

A disadvantage of smart cards having security elements in the card body is the fact that security is provided for the card body but not for the electronic module itself. The known electronic modules with security elements being arranged on the surface of the module, in the region of the contact zones or even directly on contact elements such as the antenna require a demanding manufacturing because special attention has to be paid to not impair the contacts used for establishing a contact between the electronic module and a corresponding device.

### SUMMARY OF THE INVENTION

It is an object of the invention to provide an electronic module that overcomes the drawbacks of the state of the art. In particular, it is an object of the invention to provide an electronic module which enables a simplified production and at the same time provides a high safety.

This object is achieved with an electronic module according to claim 1. In particular, an electronic module is provided which comprises a substrate, the substrate being a semiconductor and having an integrated circuit arranged thereon, a support, at least one contact element configured to establish a contact with an external contacting device, and an encasing, wherein the encasing is dielectric and encases at least the substrate and the integrated circuit, whereby the substrate and the integrated circuit are in connection with the support. The electronic module further comprises at least one security element, wherein the at least one security element is arranged after the substrate with respect to an extension direction extending from the support towards the substrate.

The security element and the support can be arranged with respect to a plane extending through the substrate and running perpendicularly to the extension direction on opposite sides of said plane.

That is to say, the security element is part of the electronic module itself and is arranged after the substrate with respect to the extension direction, wherein the substrate is in turn arranged after the support with respect to the extension direction. In other words, the substrate and its integrated circuit are arranged between the security element and the support. Again in other words, if the support is defined as a front side of the module and the region of the substrate or the encasing in the region of the substrate is defined as the rear side of the module, the security element is arranged on the rear side of the module.

Because the security element is part of the electronic module itself forgeries or a removal of the security element from the electronic module or a replacement of this electronic module by a forged electronic module in a device such as a data carrier is made more difficult or even rendered impossible, whereby the security is increased.

The electronic module can be a "contact" module, a "contactless "module or an "antenna" module, a "dual" module or a "hybrid" module. If the electronic module is provided as a contact module then the support preferably corresponds to a lead frame, wherein the one or more contact elements are arranged on the lead frame. The contact elements are in this case configured to establish a contact in the form of an electrical contact with an external device once the contact elements are brought into physical contact with the external device. The encasing of such a contact electronic module comprises the substrate and the integrated circuit. The contact elements used for establishing a contact with an external device are arranged outside the encasing, in particular on an outside surface of the lead frame. It should be noted that a dielectric encasing is understood in the context of the present invention as a non-conductive encasing.

It is conceivable that the electronic module further comprises at least one connection element for electrically connecting the substrate with the at least one contact element, wherein the connection element can be encased by the encasing and preferably corresponds to a bonding wire or a bump made of an electrically conductive material.

If the electronic module is provided as a contactless module the one or more contact elements configured to establish a contact with an external contacting device preferably correspond to one or more antennas that enable a communication with the external device using contactless technology. A conceivable technology is the RFID technology, wherein electromagnetic fields are transmitted by the external device in the form of an RF reader, and wherein the electromagnetic fields are received by the one or more antennas provided on or in the electronic module. Said one or more antennas are preferably encased by the encasing. However, it is likewise conceivable to connect the substrate, in particular its integrated circuit, with one or more antennas arranged outside the electronic module but in a data carrier for example (see below).

If the electronic module is provided as a dual module, then it comprises both, one or more contact modules and one or more contactless modules as just described.

If the electronic module is provided as a hybrid module it comprises two or more integrated circuits, semiconductor substrates and connection elements for electrically connecting the substrate with the contact elements, wherein these elements are integrated into the encasing, so that in use it is treated as it were a single component.

Irrespective of the electronic module used the substrate and its integrated circuit are arranged within the encasing, wherein the encasing brings these elements in connection with the support. The encasing protects the enclosed elements against external influences and connects them to the support. Since the security element is arranged after the support and after the substrate and its integrated circuit and, because of the encasing, also in a region outside of said elements, said elements are protected by the encasing and it is not necessary to take special care or measures with respect to the preservation of the functionality of these elements. The electronic module thus enables a simplified production. Moreover, and as will be explained further below, standard methods can be used for the production of the electronic module as well as the security element.

The semiconductor substrate preferably corresponds to a so-called chip or die, i.e. a semiconductor-wafer, in particular a silicon-wafer, wherein the integrated circuit is arranged on the die. As already mentioned, the support can be a lead frame, wherein the chip or die can be electrically connected with the lead frame by means of one or more connection elements in the form of bonding wires. The encasing can be a package at it is known in the state of the art and preferably corresponds to a curable adhesive. For example, the encasing or package can be a so-called Glob Top adhesive or sealing compound. That is, an encapsulation that encapsulates the semiconductor chip or die and the bonding wires comprises an epoxy adhesive material. Said epoxy adhesive material can be UV-curing and/or thermal curing. Preferably the encapsulation does not enclose other raw material such as acrylates.

The security element is preferably provided on the encasing. Hence, since the encasing encases the substrate, the integrated circuit and possibly also the connection element, the security element is in this case arranged in a region beyond the substrate, the integrated circuit and possibly also the at least one connection element.

The security element can be provided on a layer and wherein said layer is arranged on the encasing, or the security element can be provided as a layer that is arranged on the encasing, or the security element can be formed in the encasing.

That is, it is conceivable to provide the security element and the encasing in one piece. However, it is likewise conceivable to provide the security element and the encasing as separate components. In the latter case it is preferred to arrange the security element and the encasing essentially immediately adjacent to one another. For example, if the security element is provided in the form of a layer, it is preferred to arrange said layer directly on the encasing. Or, if the security element is provided on a layer, then it is preferred to arrange said layer directly on the casing. Essentially immediately adjacent in this context means that the layer is either applied directly onto the encasing or that there are no other components provided between the layer and the encasing with the exception of components enabling or enhancing the attachment of the layer to the encasing such as glue. Hence, it is particularly preferred that there are no other layers or electrical components arranged between the security element constituting the layer to be attached to the encasing or the security element being provided on the layer to be attached to the encasing or the security element, respectively.

In the context of the encasing being a package as explained above, it is conceivable to design the reinforcement layer as a security element or to arrange a security element on the reinforcement layer.

The security element can be a printed security element, the security element preferably corresponding to an image, bar code, QR code, alphanumeric information or the like, and/or the security element can be a diffractive element, the security element preferably corresponding to a hologram, and/or the security element can be configured to change its optical properties, in particular its appearance, upon irradiation of electromagnetic radiation.

A printed security element is preferably produced by means of at least one of pad printing, jet printing, or lithography, and a diffractive security element is preferably produced by means of imprinting or embossing. To this end it is conceivable to provide the security element as integral part of the encasing, wherein the security element is embossed or imprinted into the encasing. It is likewise conceivable to print the security element onto the encasing or onto a layer that is going to be arranged on the encasing. Moreover, it is conceivable to emboss or imprint the security element into the layer that is going to be arranged on the encasing. In this case the security element is an integral part of the layer that is going to be arranged on the encasing.

A printed security element can be made of inks that are known in the art such as printing inks or security inks. Printing inks can be colored inks, for example inks being visible in the visible or in the ultraviolet or in the infrared region of the electromagnetic spectrum and security inks can be optically variable inks, thermochromic inks and photochromic inks, respectively. Besides, it is conceivable that the printed security element comprises one or more metallic inks. In this case the metallic ink could be used as a further data carrier in that information or data is provided by means of the metallic properties of the metallic ink.

In a further aspect a data carrier comprising at least one electronic module as described above is provided.

The security element can be entirely embedded within the data carrier, or the data carrier can comprise an opening extending from an outside of the data carrier at least partially into an inside of the data carrier, the electronic module being arranged within said opening such that at least part of the security element is visible from the outside.

In the former case, if the data carrier is made of materials that are not at least partly transparent, the security element is a hidden security element. That is, the security element is invisible to a viewer and only becomes visible if it is uncovered, for example upon destruction of the data carrier. Such a hidden security element can be obtained if the electronic module is essentially entirely embedded within the data carrier. Essentially entirely here means that the electronic module is, with the exception of its support in case of a contact electronic module, completely arranged within the data carrier. The support, especially its contact elements in case of a contact module, should remain freely accessible in order to enable a communication between the electronic module and a corresponding external device such as a terminal.

The data carrier can comprise at least a cover layer and a base layer, wherein the electronic module extends at least partially through the cover layer. In case of a hidden security element the security element is hidden by the cover layer and the base layer. In case of a visible security element the above-mentioned opening in the data carrier extends from an outer surface of the base layer towards the inside of the data carrier until it reaches the security element, whereby the security element is unraveled. In both cases it is preferred that the electronic module is arranged in the data carrier such, that the security element of the electronic module is oriented towards a rear side of the data carrier. This already results from the fact that the support of the electronic module, especially the contact elements in case of a contact electronic module as described above, is preferably arranged in the data carrier such that it can communicate with an external device. The support is therefore preferably arranged on a front side, in particular in an outer surface of the cover layer, of the data carrier.

An essentially transparent overlay can be arranged in the opening, and wherein said overlay extends from the outside of the data carrier towards the electronic module arranged inside the opening.

Hence, if a visible security element and an opening in the data carrier are provided, it is preferred to close said part of the opening that is not already filled by the electronic module with an overlay. The overlay can be made of plastics, preferably from a polycarbonate, polyvinylchloride or from a polyethylene terephthalate. However, it is likewise conceivable to provide the overlay by means of a bio-material. In fact, the materials of the overlay are not restricted to the examples given herein but can be any material known in the field of the data carriers.

A cross section of the opening can be smaller than or equal to or bigger than a cross section of the electronic module. The same applies to the overlay, if applicable. For example, the opening can be provided with a smaller cross section than the electronic module such that only part of the electronic module is visible. However, it is likewise conceivable that the cross section of the opening is larger than the cross section of the electronic module such that potential other components that are provided in the data carrier, for instance one or more antennas in case of a contactless or dual electronic module (see above), are visible too. In any case it is preferred that the cross section of the opening is at least equal to the cross section of the electronic module in the region of the security element in order to unravel the security element.

The data carrier can comprise one or more additional layers, wherein said one or more additional layers are arranged between the cover layer and the base layer. In case of a visible security element the opening provided in the data carrier should then preferably extend from the base layer towards the inside of the data carrier until it reaches the security element. Depending on the amount of additional layers and the size of the electronic module, the opening thereby also extends through one or more of the additional layers.

In a further aspect a security document comprising at least one data carrier as described above is provided, the security document preferably being an identity card, a passport, a credit card or the like.

In the case of a passport for example the data carrier could correspond to a page of the passport, wherein said page is made of plastics, e.g. the cover layer and the base layer, within which one or more electronic modules are arranged. In the case of a credit card or bank card, for example, the data carrier could correspond to the card body. Such cards are often also referred to as smart cards. A data carrier comprising a contact electronic module can be used for a contact smart card, wherein the contact elements of the electronic module remain assessable on the surface of the smart card. On the other hand a data carrier comprising a contactless module can be used for a contactless smart card, wherein the contact elements, e.g. the antennas, are arranged within the electronic module itself, or wherein the contact elements, e.g. the antennas, are arranged outside the encasing or even outside the electronic module and in the card body, wherein said antennas are then in electrical connection with the substrate and the integrated circuit of the electronic module arranged within the encasing by means of the connection elements.

In a further aspect a method of producing an electronic module, preferably the electronic module as described above, is provided, the method comprising the steps of:
- Providing a substrate, the substrate being a semiconductor and having an integrated circuit arranged thereon, a support, at least one contact element configured to establish a contact with an external reader, and an encasing, the encasing being dielectric and encasing at least the substrate and the integrated circuit, and
- Arranging at least one security element after the substrate with respect to an extension direction extending from the support towards the substrate.

To this end it is conceivable to provide the encasing by means of a package, wherein the package preferably corresponds to a package know in the state of the art such as the so-called Glob top, i.e. a curable material such as a UV-curing and/or thermal curing material, particularly preferably based on an epoxy resin.

Moreover, the encasing is preferably produced by dispensing a liquid curable resin onto the support, wherein at least the substrate and the integrated circuit are pressed into the resin, and wherein the resin is then cured. Another possibility is to mount the substrate with its integrated surface on the support, to arrange these elements within a mold, and to then fill the liquid resin into the mold and over the said elements.

Different procedures for producing the security element on the electronic module are conceivable. The security element can be provided on a layer and wherein said layer is arranged on the encasing, or the security element can be provided as a layer that is arranged on the encasing, or the security element can be formed in the encasing. The security element can be produced by at least one of printing, imprinting, lamination or embossing, the security element being preferably produced by at least one of pad printing, jet printing, or lithography.

For example, if the security element is formed in the encasing, it is preferred to produce said security element by imprinting or embossing. One way of doing so comprises the step of dispensing the liquid resin over the substrate and the integrated circuit, the step of pressing a stamp comprising the structure intended for the security element into the liquid resin, the step of curing the liquid resin by means of irradiation in the ultraviolet region, and finally the step of removing the stamp from the cured resin. The thus encasing comprises an integrally formed security element which reflects the shape of the stamp. It is likewise conceivable to provide the security element on a separate layer in a first step and to then arrange said separate layer on the encasing in a second step. Moreover, it is possible that said separate layer directly corresponds to the security element or that said separate layer comprises the security element in the sense of an additional element. In the former case it is conceivable to make the separate layer from a curable resin, preferably an epoxy resin, and to then apply said layer onto the encasing. However, before doing so the security element is formed into the separate layer by means of imprinting or embossing as just described. That is, the security element is formed in the separate layer in a first step and said security-element-bearing separate layer is then applied onto the encasing in a second step. Here, the security element is formed into the separate layer and the security element and the separate layer are configured as a single-piece element. In the latter case the security element is provided onto the separate layer, for example by laminating or printing the security element onto the separate layer using printing methods as described earlier. Here, the security element is applied onto the separate layer and security element and the separate layer are configured as a two-piece element.

For the fixation of the separate layer on the encasing an intermediate step might be necessary such as gluing the separate layer onto the encasing or applying the separate layer by means of hot stamping or by curing, potentially with the help of ultraviolet radiation irradiation and/or the application of heat.

In a further aspect a method of producing a data carrier, preferably a data carrier as described above, comprises the steps of providing at least a cover layer and a base layer, and arranging an electronic module as described above between the cover layer and the base layer. The security element is preferably configured to change its optical properties upon irradiation with electromagnetic radiation, wherein electromagnetic radiation is preferably irradiated onto the security element before the electronic module is arranged in the data carrier or after the electronic module is arranged in the data carrier.

The electronic module can be arranged within the data carrier by milling or otherwise cutting a corresponding aperture into the data carrier, in particular into the layers constituting the data carrier, see above. The electronic module is then inserted into the thus created aperture. However, it is also possible to laminate the electronic module between the layers constituting the data carrier. In case of a visible security element the data carrier preferably comprises an opening unraveling the security element. Said opening can be filled with a transparent overlay, if desired. Hence, if the security element is configured to change its optical properties upon irradiation with electromagnetic radiation, it is conceivable to irradiate the security element prior to its arrangement in the data carrier, or subsequent to its arrangement in the data carrier. In the latter case, the essentially finished data carrier is irradiated with electromagnetic radiation from its rear side, such that the unraveled rare side of the security element can be treated with the radiation. This allows a personalization of the finished data carrier.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
Fig. 1 shows a front view of a security document comprising a data carrier with an electronic module according to a first aspect;
Fig. 2 shows a back view of the security document according to figure 1;
Fig. 3 shows a sectional view through the security document according to figure 1;
Fig. 4a shows a sectional view through an electronic module according to a further aspect;
Fig. 4b shows a sectional view through an electronic module according to a further aspect;
Fig. 5 shows a sectional view through an electronic module according to a further aspect;
Fig. 6 shows a sectional view through an electronic module according to a further aspect;
Fig. 7 shows a sectional view through an electronic module according to a further aspect;
Fig. 8 shows a sectional view through an electronic module according to a further aspect;
Fig. 9a shows a schematic representation of a manufacturing process of the electronic module according to figure 5 in an initial state;
Fig. 9b shows a schematic representation of the manufacturing process of the electronic module according to figure 5 in an intermediate state;
Fig. 9c shows a schematic representation of the manufacturing process of the electronic module according to figure 5 in a final state;
Fig. 10a shows a schematic representation of the manufacturing process of the electronic module according to figure 3 in an initial state;
Fig. 10b shows a schematic representation of the manufacturing process of the electronic module according to figure 3 in an intermediate state;
Fig. 10c shows a schematic representation of the manufacturing process of a security document comprising the electronic module according to figure 3 in a final state;
Fig. 11a shows a schematic representation of a manufacturing process of an electronic module according to a further aspect in an initial state;
Fig. 11b shows a schematic representation of a manufacturing process of the electronic module according to figure 11a in an intermediate state;
Fig. 11c shows a schematic representation of a manufacturing process of the electronic module according to figure 11a in a final state;
Fig. 12a shows a schematic representation of a further manufacturing process of an electronic module according to a further aspect in an initial state;
Fig. 12b shows a schematic representation of a further manufacturing process of the electronic module according to figure 12a in a final state.

### DESCRIPTION OF PREFERRED EMBODIMENTS

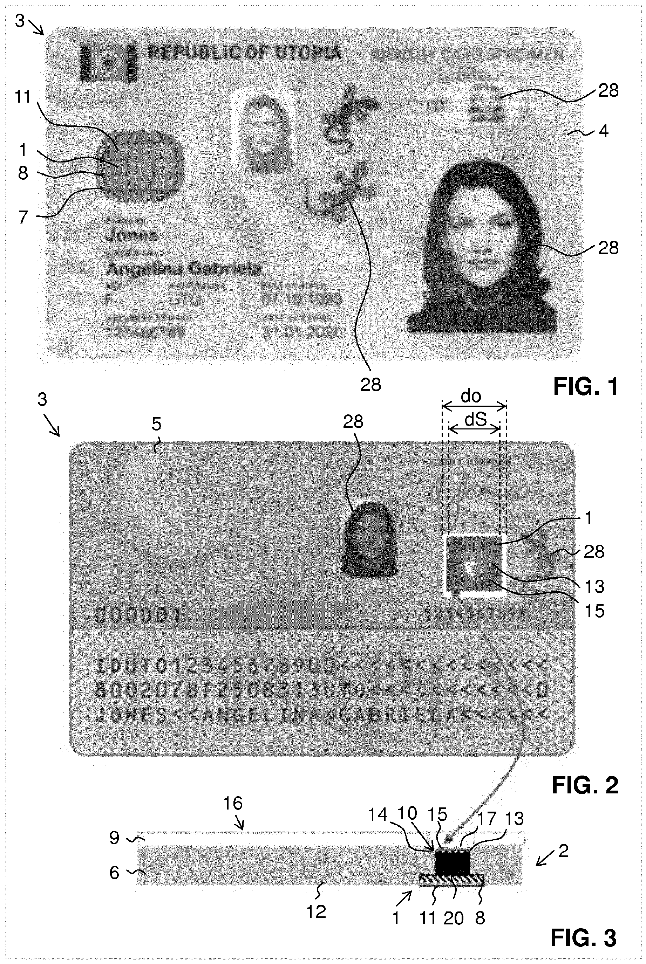

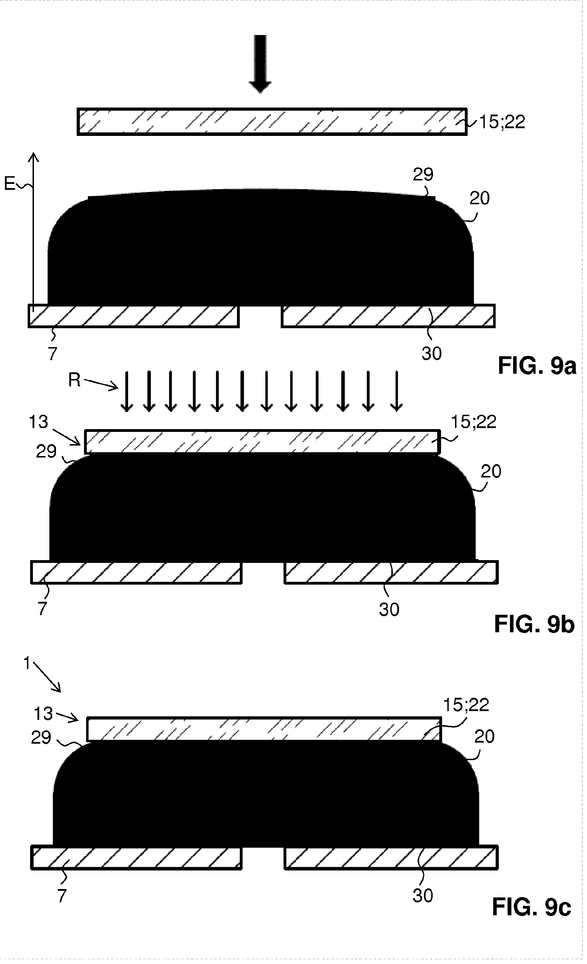

Several embodiments of an electronic module 1 and a data carrier 2 or security document 3 comprising an electronic module 1 are depicted in figures 1 to 8. Methods of their manufacturing are disclosed in figures 9a to 12b.

In figures 1 and 2 a security document 3 in the form of an identity card comprising a front side 4 and a rear side 5 is depicted. The security document 3 comprises several security features 28 such as images of the identity card holder or particular logos such as salamanders, some of which are visible from the front side 4 and/or from the rear side 5 of the security document 3. Moreover, the security document 3 comprises an electronic module 1, which is visible from the front side 4 as well as from the rear side 5 of the security document 3. In the present case the electronic module 1 corresponds to a contact electronic module, i.e. an electronic module comprising contact elements 7 that are configured to establish an electrical connection with a corresponding device such as a terminal when brought into physical connection with the terminal. To this end the electronic module 1 also comprises a support 8 in the form of a lead frame, on which the contact elements 7 are arranged.

As best seen in figure 3, the security document 3 in this case comprises a data carrier 2, which is embedded within an opening in the security document 3 and which is comprised of two layers, a cover layer 6 and a base layer 9. An opening or recess 10 extends through the cover layer 6 of the data carrier 2, wherein the electronic module 1 is arranged within said opening or recess 10. In particular, the electronic module 1 is arranged within the data carrier 2 such, that a front side 11 of the electronic module 1, here the lead frame 8, lies essentially flush with an outer surface 12 of the cover layer 6. A rear side 13 of the electronic module 1 lies essentially flush with an inner surface 14 of the cover layer 6. Said rear side 13 of the electronic module 1 comprises a security element 15, details of which will also be discussed in greater detail further below. Since the rear side 16 of the data carrier 2 comprises a window or an opening 10 that extends from an outside of the data carrier 2 towards at least partially into an inside of the data carrier 2, here completely through the base layer 9, the rear side 13 of the electronic module 1 and thus the security element 15 arranged thereon is visible from an outside. This window or opening 10 is filled with an overlay 17. However, since said overlay 17 is made of a transparent material, the security element 15 remains visible. Here, the cross section do of the window or opening 10 as well as the cross section of the overly 17, which equals the cross section do of the window or opening 10, is slightly larger than the cross section ds of the electronic module 1 in the region of the security element 15, i.e. in the region of the rear side 13 of the electronic module 1. This ensures that the entire security element 15 is visible when looking from an outside onto the rear side 5 of the security document 3 and thus onto the rear side 16 of the data carrier 2 and the rear side 13 of the electronic module 1, respectively.

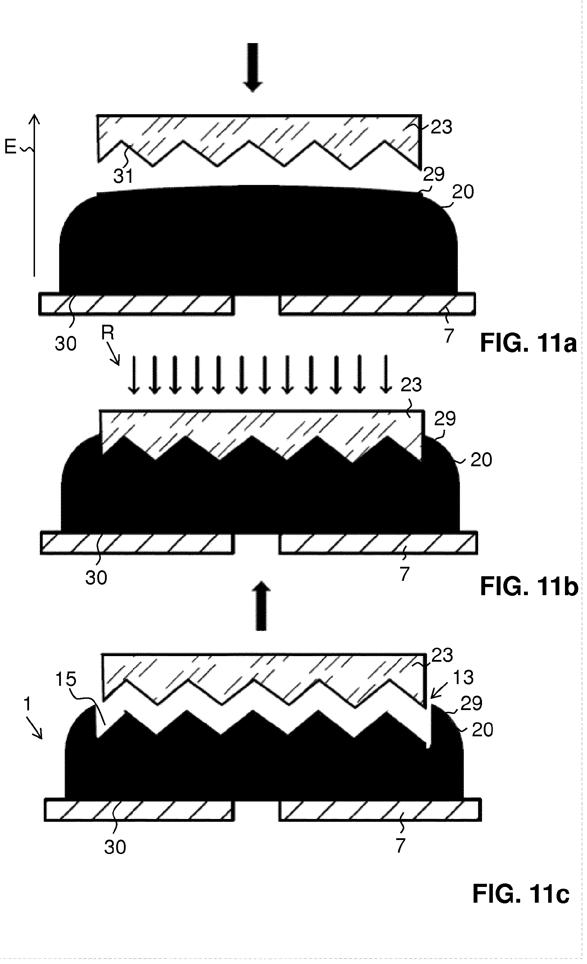

The security element 15 can be realized with various shapes. For example, the security element 15 according to figure 2 is constituted by alphanumeric information and images, wherein these features can be provided by means of colored and/or optically variable inks. However, it is likewise conceivable to provide a security element 15 on an electronic module 1 being constituted by a diffractive element such as a hologram, see figures 11a to 12b.

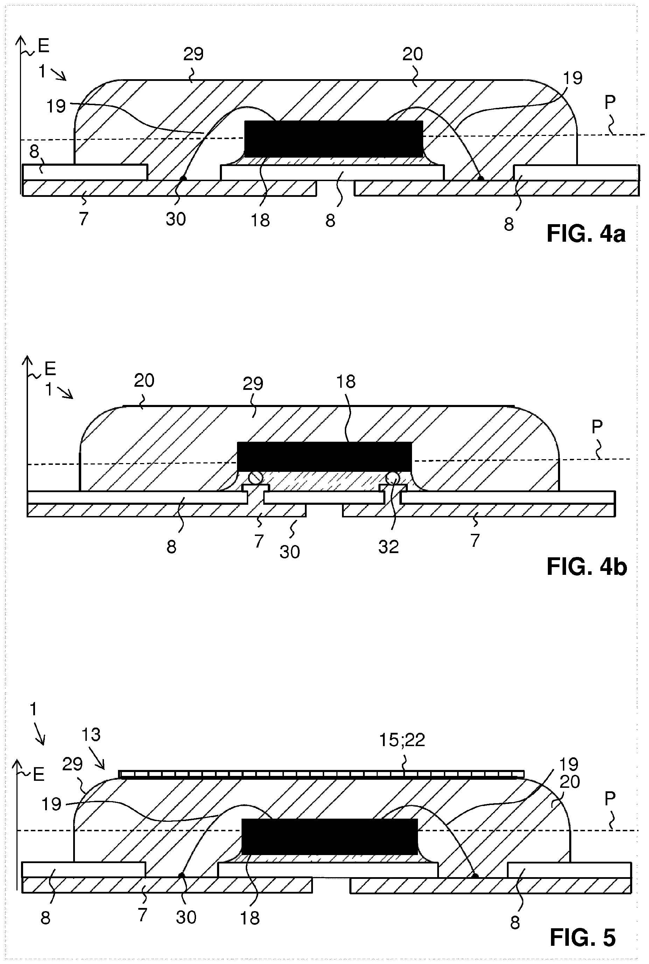

In figures 4a and 5 an electronic module 1 corresponding to a contact module is depicted. This electronic module 1 comprises a support 8 in the form of a lead frame, a semiconductor substrate 18 with an integrated circuit, also called die, two connection elements 19, also called bonding wires, and an encasing 20 corresponding to a package as it is known in the art. The dielectric encasing 20 encases the substrate 18 with its integrated circuit and the two connection elements 19 and thereby connects them with the lead frame 8 and also secures them to the lead frame 8. As depicted in figure 5, a security element 15 is provided on the rear side 13 of the electronic module 1. Here, the security element 15 has the form of a layer 22 which is arranged on a rear side 29 of the encasing or package 20 as well as after the lead frame 8 and after the substrate 18 with respect to an extension direction E extending from the lead frame 8 towards the substrate 18. That is to say, the security element 15 is part of the electronic module 1 itself and is arranged after the substrate 18 with respect to the extension direction E, wherein the substrate 18 is in turn arranged after the support or lead frame 8 with respect to the extension direction E. In other words, the substrate 18 and its integrated circuit are arranged between the security element 15 and the support 8, wherein the security element 15 and the support 8 are arranged with respect to a plane P extending through the substrate 18 and running perpendicularly to the extension direction E on opposite sides of said plane P.

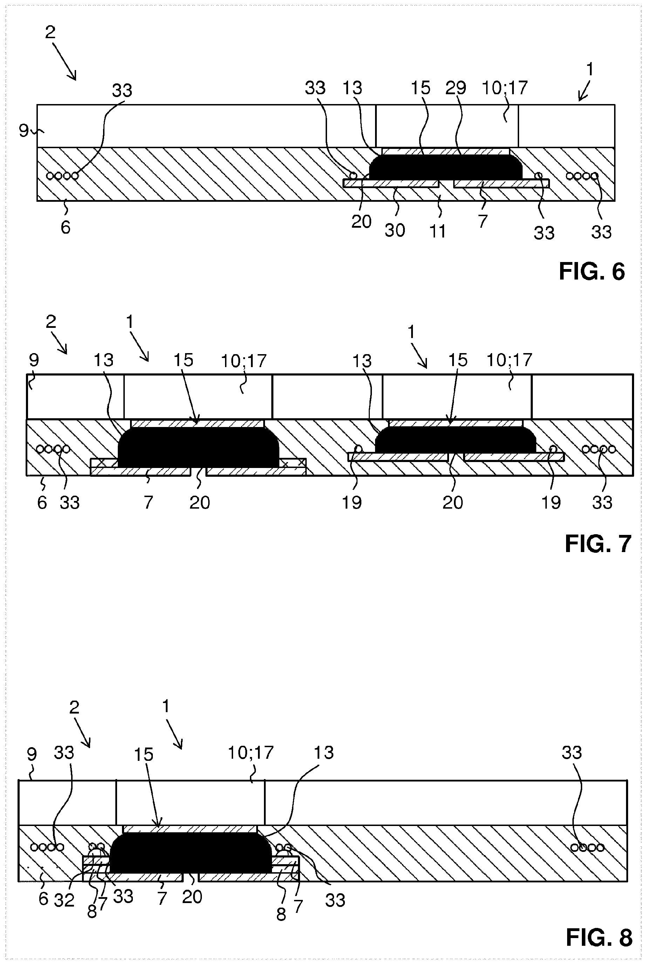

Figures 4b and 6 to 8 depict data carriers 2 comprising in each case a different type of electronic module 1. In particular, figure 4b depicts a data carrier 2 comprising an electronic module 1 wherein the contact elements correspond to bumps 32 which provide a connection between the contact elements 7 and the substrate 18. The bumps 32 can be seen as electrically conductive elements such as metallic particles, preferably gold particles, which can establish an electrical connection between the contact elements 7 and the substrate 18. Hence, the electronic module 1 has been manufactured according to a so-called Flip Chip or controlled collapse chip connection method. Moreover, figure 6 depicts a data carrier 2 comprising a contactless electronic module 1, wherein the contact elements correspond to antennas 33 that enable a communication with the external device using contactless technology. Here, two antennas 33 are arranged outside the electronic module 1 within the cover layer 6 and two antennas 33 are arranged in immediate proximity to the encasing 20. The data carrier 2 according to figure 7 comprises a so-called hybrid module, i.e. it comprises here two electronic modules 1 of a different kind. Namely, one electronic module 1 is provided as a contact module comprising connection elements in the form of bonding wires as described with reference to the contact module depicted in figures 4 and 5. The other electronic module 1 is provided in the form of a contactless module as just described with reference to figure 6, i.e. an electronic module 1 comprising connection elements in the form of antennas 33. Figure 8 depicts a data carrier 2 comprising an electronic module 1 in the form of a dual module, wherein a contact module 1 comprising bonding wires but also antenna wires 33 are provided. A bonding of some of the antenna wires 33 to the contact module 1 is achieved by means of bumps 32 provided on the contact module 1. It should be understood that any of these electronic modules 1 comprises at least one security element 15 arranged on the rear side 13 of the electronic module 1 as described above. In addition, any data carrier 2 comprises an opening 10 filled with a transparent filler or overlay 17 in order to unravel said security elements.

The encasing or package 20 is known in the state of the art and corresponds to a curable adhesive, here to a so-called Glob Top adhesive based on a liquid epoxy adhesive material which is UV-curing and/or thermal curing. With respect to figures 9a to 12b various aspects of the manufacturing of the encasing 20 as well as the security element 15 will now be discussed in detail.

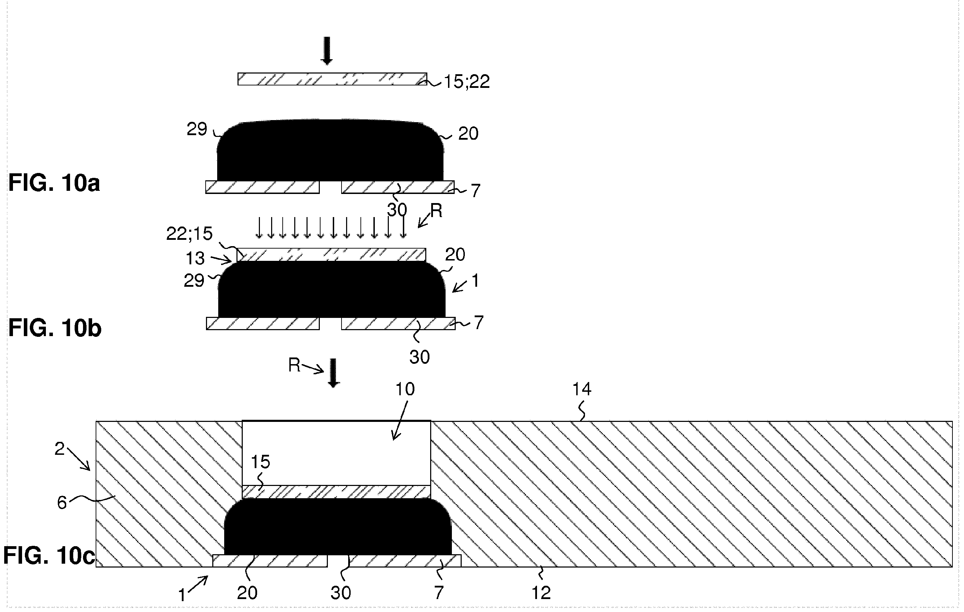

In figures 9a to 10b the manufacturing of an electronic module 1 is shown, wherein the liquid resin 20, here a resin 20 of black color, has been applied over the semiconductor substrate 18, its integrated circuit and the connection elements 19. It should be noted that the resin could be of any other color, too. These elements have been arranged on the lead frame 8 initially. Then, a separate layer 22 is attached to the rear side 29 of the encasing or package 20, i.e. on that side of the package 20 that lies oppositely to a front side 30 of the encasing or package 20 facing the support or lead frame 8 (figures 9a and 10a). Once the separate layer 22 is placed on the rear side 29 of the encasing or package 20, it is fixed to the encasing or package 20 by irradiation with electromagnetic radiation R and/or by application of heat (figures 9b and 10b). The thus created electronic module 1 comprises a security element 15 on the package 20, in particular on the layer 22 or as the layer 22, wherein the security element 15 is arranged on the rear side 13 of the electronic module 1 (figures 9c and 10c).

In the present situation the security element 15 can be provided on said additional or separate layer 22, for example by printing an image, bar code, QR code, alphanumeric information or the like onto a surface of the additional layer 22. However, it is likewise conceivable that said additional layer 22 itself is the security element 15. In this case the security element 15 is formed into the additional layer 22 by means of imprinting or embossing a diffractive structure (see below). Once this security-element-bearing separate layer 22 has been formed it is applied onto the rear side 29 of the encasing or package 20.

As directly follows from the figures, the additional layer 22 is in any case essentially immediately adjacent to the rear side 29 of the encasing or package 20, which also follows from figure 5. That is, there are no other components such as connection elements or contact elements arranged between the additional layer 22 and the encasing or package 20. Put differently, the encasing or package 20 shields its enclosed components such as the substrate 18 and its integrated circuit and the connection elements 19 from the additional layer 22 and thus also from the security element 15 provided on the additional layer 22. If the additional layer 22 directly corresponds to the security element 15 itself, then said encasing or package 20 likewise seals its encased components from the security element 15.

The thus created electronic module 1 can then be further processed, such as placed within a data carrier 2 as shown in figure 10c. To this end, the data carrier 2, here represented by the cover layer 6, comprises a recess or opening 10 that is filled with a transparent filler or overlay 17 that extends from the front surface 12 of the cover layer 6 towards the rear surface 14 of the cover layer 6 through the entire cover layer 6. The electronic module 1 is arranged within said recess or opening 10 such that is front surface, which is here formed by the lead frame 8, lies flush with the front surface 12 of the cover layer 6. Hence, the rear side 13 of the electronic module 1, in particular its security element 15, remains visible through the transparent filler or overlay 17 when viewed onto the rear side of the data carrier 2. Depending on the characteristics of the security element 15, a further processing such as a personalization can take place at this point. In fact, if the security element 15 is configured to change its optical properties upon irradiation of electromagnetic radiation, then a further processing or personalization of the security element can take pace in a state where it is already arranged within the data carrier by simply irradiating electromagnetic radiation R onto the security element 15.

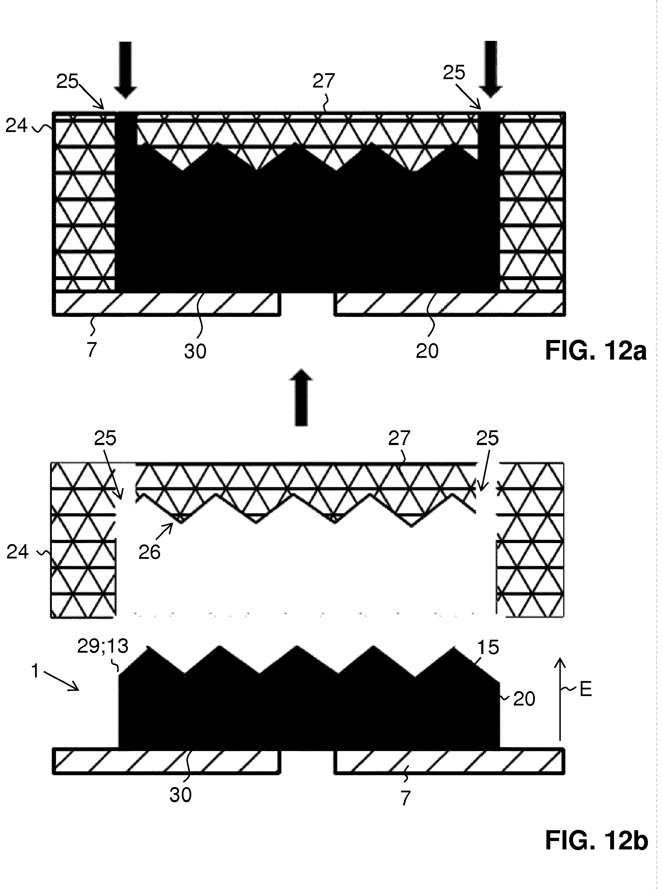

In figures 11a to 11c and 12a to 12b two different ways of producing an electronic module 1 having an integral security element 15 formed in the encasing or package 20 are disclosed.

Figure 11a shows a substrate 18 with its integrated circuit and connection elements 19 being mounted on the lead frame 8 and which are covered with a liquid curable resin 20. A stamp 23 comprising a relief structure 31 is then pressed into the resin 20. While the stamp 23 is pressed into the resin 20 ultraviolet radiation R or thermal heat is applied to the resin 20 in order to cure the resin 20, see figure 11b. Once the resin 20 is cured, the stamp 23 is removed, see figure 11c. In this way an encasing or package 20 is obtained which has the security element 15 in the form of a diffractive structure formed directly therein. In figure 12a a mold 24 is shown, wherein a substrate 18 with its integrated circuit and connection elements 19 being arranged on the support or lead frame 8 are arranged within the mold 24. Liquid resin 20 is then introduced into the mold 24 via apertures 25 provided in the mold 24. Since the mold comprises a relief structure 26 on its upper side 27, said diffractive structure 26 is also realized in the resin 20 that bears against it. Once the mold 24 is removed, an encasing or package 20 is obtained which has the security element 15 in the form of a diffractive structure formed directly therein. Both procedures thus lead to a security element 15 formed integrally in the encasing or package 20 of the electronic module 1.

**LIST OF REFERENCE SIGNS**

| | | | |
|---|---|---|---|
| 1 | electronic module | 20 | encasing |
| 2 | data carrier | 22 | layer |
| 3 | security document | 23 | stamp |
| 4 | front side | 24 | mold |
| 5 | rear side | 25 | aperture |
| 6 | cover layer | 26 | relief structure |
| 7 | contact element | 27 | upper side |
| 8 | support | 28 | security feature |
| 9 | base layer | 29 | rear side |
| 10 | opening | 30 | front side |
| 11 | front side | 31 | relief structure |
| 12 | outer surface | 32 | bump |
| 13 | rear side | 33 | antenna |
| 14 | inner surface | E | extension direction |
| 15 | security element | P | plane |
| 16 | rear side | R | electromagnetic radiation |
| 17 | overlay | | |
| 18 | substrate | do | cross-section |
| 19 | connection element | ds | cross-section |

## Claims

1. An electronic module (1) comprising:
- a substrate (18), the substrate (18) being a semiconductor and having an integrated circuit arranged thereon,
- a support (8),
- at least one contact element (7) configured to establish a contact with an external contacting device, and
- an encasing (20), wherein the encasing (20) is dielectric and encases at least the substrate (18) and the integrated circuit, whereby the substrate (18) and the integrated circuit are in connection with the support (8),
**characterized in that** the electronic module (1) further comprises at least one security element (15), wherein the at least one security element (15) is arranged after the substrate (18) with respect to an extension direction (E) extending from the support (8) towards the substrate (18).

2. The electronic module (1) according to claim 1, wherein the security element (15) and the support (8) are arranged with respect to a plane (P) extending through the substrate (18) and running perpendicularly to the extension direction (E) on opposite sides of said plane (P).

3. The electronic module (1) according to claim 1 or 2, wherein the security element (15) is provided on the encasing (20).

4. The electronic module (1) according to any one of the preceding claims, wherein the security element (15) is provided on a layer (22) and wherein said layer (22) is arranged on the encasing (20), or
wherein the security element (15) is provided as a layer (22) that is arranged on the encasing (20), or
wherein the security element (15) is formed in the encasing (20).

5. The electronic module (1) according to any one of the preceding claims, wherein the security element (15) is a printed security element (15), the security element (15) preferably corresponding to an image, bar code, QR code, alphanumeric information or the like, and/or
wherein the security element (15) is a diffractive element, the security element (15) preferably corresponding to a hologram, and/or
wherein the security element (15) is configured to change its optical properties, in particular its appearance, upon irradiation of electromagnetic radiation.

6. The electronic module (1) according to any one of the preceding claims, further comprising at least one connection element (19; 32) for electrically connecting the substrate (18) with the at least one contact element (7), wherein the connection element (19; 32) is encased by the encasing (20) and preferably corresponds to a bonding wire (19) or a bump (32) made of an electrically conductive material.

7. A data carrier (2) comprising at least one electronic module (1) according to any one of the preceding claims.

8. The data carrier (2) according to claim 7, wherein the security element (15) is entirely embedded within the data carrier (2), or
wherein the data carrier (2) comprises an opening (10) extending from an outside of the data carrier (2) at least partially into an inside of the data carrier (2), the electronic module (1) being arranged within said opening (10) such that at least part of the security element (15) is visible from the outside.

9. The data carrier (2) according to claim 8, wherein an essentially transparent overlay (17) is arranged in the opening (10), and wherein said overlay (17) extends from the outside of the data carrier (2) towards the electronic module (1) arranged inside the opening (10).

10. The data carrier (2) according to claim 9 or 10, wherein a cross section (do) of the opening (10) is smaller than or equal to or bigger than a cross section (ds) of the electronic module (1).

11. A security document (3) comprising at least one data carrier (2) according to any one of claims 7 to 10, the security document (3) preferably being an identity card, a passport, a credit card or the like.

12. A method of producing an electronic module, preferably the electronic module (1) according to any one of claims 1 to 6, the method comprising the steps of:
- Providing a substrate (18), the substrate (18) being a semiconductor and having an integrated circuit arranged thereon, a support (8), at least one contact element (7) configured to establish a contact with an external contacting device, and an encasing (20), wherein the encasing (20) is dielectric and encases at least the substrate (18) and the integrated circuit, whereby the substrate (18) and the integrated circuit are in connection with the support (8), and
- Arranging at least one security element (15) after the substrate (18) with respect to an extension direction (E) extending from the support (8) towards the substrate (18).

13. The method according to claim 12, wherein the security element (15) is provided on a layer (22) and wherein said layer (22) is arranged on the encasing (20), or
wherein the security element (15) is provided as a layer (22) that is arranged on the encasing (20), or
wherein the security element (15) is formed in the encasing (20).

14. The method according to claim 12 or 13, wherein the security element (15) is produced by at least one of printing, imprinting, lamination or embossing, the security element (15) being preferably produced by at least one of pad printing, jet printing, or lithography.

15. A method of producing a data carrier, preferably a data carrier (2) according to any one of claims 7 to 10, comprises the steps of:
- Providing at least a cover layer (6) and a base layer (9), and
- Arranging an electronic module (1) as claimed in anyone of claims 1 to 6 between the cover layer (6) and the base layer (9),
wherein the security element (15) is preferably configured to change its optical properties upon irradiation with electromagnetic radiation (R), and
wherein electromagnetic radiation (R) is preferably irradiated onto the security element (15) before the electronic module (1) is arranged in the data carrier (2) or after the electronic module (1) is arranged in the data carrier (2).
